# EUROPEAN PATENT APPLICATION

(11) **EP 4 826 345 A1**
(43) Date of publication of application: **21.10.2026**
(21) Application number: 24903237.6
(22) Date of filing: 19.08.2024
(51) Int. Cl.: G01L 1/00

(54) **ELASTIC COMPOSITION**

(30) Priority: 15.12.2023 JP 2023212481
(71) Applicant: BRIDGESTONE CORPORATION, Chuo-ku Tokyo 104-8340 (JP)
(72) Inventor: URATA, Tomohiro, Tokyo 104-8340 (JP); NISHIDA, Mitsuhiro, Tokyo 104-8340 (JP); KAGA, Norihiko, Tokyo 104-8340 (JP)
(74) Representative: Marks & Clerk LLP
(86) International application number: PCT/JP2024/029356
(87) International publication number: WO 2025/126574

(57) **Abstract**

An elastomeric composition capable of detecting, with a simple structure, displacement of an object is obtained. A rubber composition as an elastomeric composition includes a base portion, and a raised portion raised from a surface of the base portion, distributed in a direction along the surface, magnetized, and elastically deformed by an external force.

## Description

### Technical Field

The technology of the present disclosure relates to an elastomeric composition.

### Background Art

WO 2021/124992 A describes a learned model that is learned by using, as learning data, a plurality of physical amounts including at least three physical amounts, the at least three physical amounts varying in accordance with deformation and including a target physical amount with which time-series information is associated. In the learned model, learning is performed so as to output the target physical amount using at least two physical amounts other than the target physical amount as inputs. Further, an estimation unit, which inputs two physical amounts of an object of estimation that correspond to the at least two physical amounts other than the target physical amount, and estimates a target physical amount corresponding to the object of estimation, is included.

WO 2021/124992 A describes that an electrical characteristic of a member varies in accordance with the deformation, and a first physical amount deforming the member, a second physical amount expressing the electrical characteristic, and a target physical amount expressing the deformation amount of the member are included. WO 2021/124992 A describes that the learned model uses the first physical amount and the second physical amount as inputs and outputs the target physical amount.

### SUMMARY OF INVENTION

### Technical Problem

The electrical characteristics described in Patent Literature 1 include electrical resistance, and other examples include electrostatic capacitance. However, in order to measure these electrical characteristics and electrostatic capacitance, a wiring is required, resulting in a complicated structure.

An object of the disclosure is to obtain an elastomeric composition capable of detecting, with a simple structure, displacement of an object.

### Solution to Problem

An elastomeric composition of a first aspect includes a base portion, and a raised portion raised from a surface of the base portion, distributed in a direction along the surface, magnetized, and elastically deformed by an external force.

In the elastomeric composition, the raised portion raised from the surface of the base portion is distributed in the direction along the surface of the base portion and magnetized. Thereby, a magnetic field around the elastomeric composition is generated. In a case in which the raised portion elastically deforms by receiving an external force from an object, a surrounding magnetic field also changes, so that the displacement of the object can be detected by the change in the magnetic field. The base portion and the raised portion do not require a wiring, and have a simple structure.

In a second aspect, in the elastomeric composition of the first aspect, the raised portion has a constant cross-sectional shape in a direction parallel to the surface.

Since the cross-sectional shape of the raised portion is constant (for example, circular) in a direction orthogonal to a protruding direction, the deformed shape of the raised portion is stabilized.

In a third aspect, in the elastomeric composition of the first aspect, the raised portion has a shape including a portion in which a cross-sectional area in a direction parallel to the surface decreases toward a distal end side in a raised direction.

Therefore, even in a case in which the external force acting on the raised portion from the object is small, the change in the magnetic field due to the deformation of the raised portion can be generated.

In a fourth aspect, in the elastomeric composition of any one of the first to third aspects, the raised portion includes a plurality of protrusions arranged at intervals in the direction along the surface.

Since the plurality of protrusions included in the raised portion are arranged at intervals in the direction along the surface, the displacement of the object can be detected in a region where the protrusions are disposed.

In a fifth aspect, in the elastomeric composition of any one of the first to fourth aspects, the base portion is formed of nonmagnetic rubber.

With a configuration in which the base portion is not magnetized, the displacement of the object can be detected with high accuracy.

### Advantageous Effects of Invention

In the technology of the disclosure, the displacement of an object can be detected with a simple structure.

### BRIEF DESCRIPTION OF DRAWINGS

Fig. 1 is a perspective view illustrating a rubber composition of a first embodiment.
Fig. 2 is an explanatory view illustrating a change in lines of magnetic force generated by the rubber composition of the embodiment.
Fig. 3 is a plan view illustrating the rubber composition of the first embodiment.
Fig. 4 is a front view illustrating the rubber composition of the first embodiment together with a shear force measuring device.
Fig. 5 is a block diagram illustrating a configuration of the shear force measuring device of the rubber composition of the first embodiment.
Fig. 6 is a front view illustrating an example of a deformed state of the rubber composition of the first embodiment.
Fig. 7 is a front view illustrating an example of a deformed state of the rubber composition of the first embodiment.
Fig. 8 is a front view illustrating an example of a deformed state of the rubber composition of the first embodiment.
Fig. 9 is a front view illustrating an example of a deformed state of the rubber composition of the first embodiment.
Fig. 10 is a front view illustrating a rubber composition of a second embodiment.
Fig. 11 is a front view illustrating a rubber composition of a third embodiment.
Fig. 12 is a front view illustrating a rubber composition of a fourth embodiment.
Fig. 13 is a front view illustrating a rubber composition of a comparative example.
Fig. 14 is a table showing evaluation results obtained by estimating a shear force in rubber compositions of the first to fourth embodiments and the comparative example.
Fig. 15 is a perspective view illustrating a rubber composition of a fifth embodiment.
Fig. 16 is a perspective view illustrating a rubber composition of a sixth embodiment.

### DESCRIPTION OF EMBODIMENTS

Hereinafter, an elastomeric composition of an embodiment of the disclosure will be described with reference to the drawings. In the drawings, components denoted by the same reference numerals mean the same components. However, unless otherwise specified in the specification, each component is not limited to one, and a plurality of components may be present.

Description of overlapping configurations and reference numerals in the drawings may be omitted. The technology of the disclosure is not limited to the following embodiments, and can be implemented with appropriate modifications such as omission of the configuration or replacement with a different configuration within the scope of the object of the technology of the disclosure.

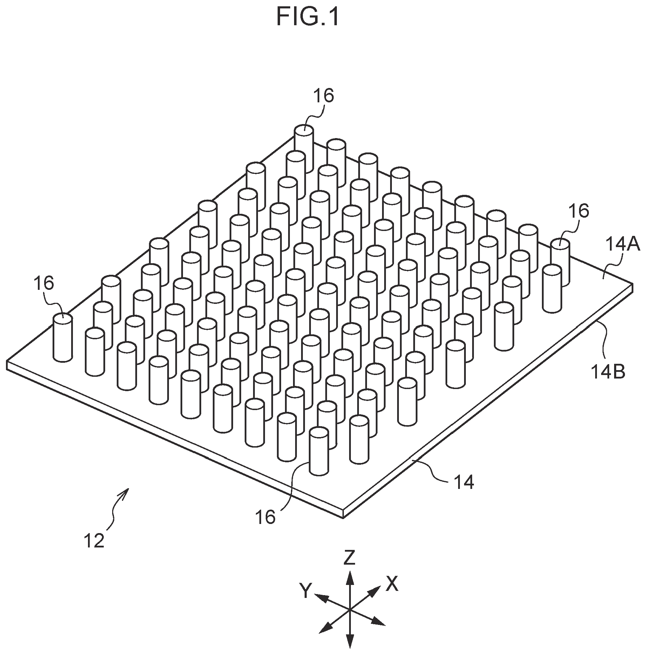

Fig. 1 illustrates a rubber composition 12 of a first embodiment. The rubber composition 12 is an example of an elastomeric composition. In the drawings, a width direction, a depth direction, and a thickness direction of the rubber composition 12 are indicated by arrow X, arrow Y, and arrow Z, respectively.

The rubber composition 12 includes a base portion 14. The base portion 14 is made of rubber. In the illustrated example, the base portion 14 has a plate shape or a sheet shape, and is formed in a rectangular shape when viewed in the thickness direction. One surface of the base portion 14 in the thickness direction is a front surface 14A, and the opposite surface is a back surface 14B.

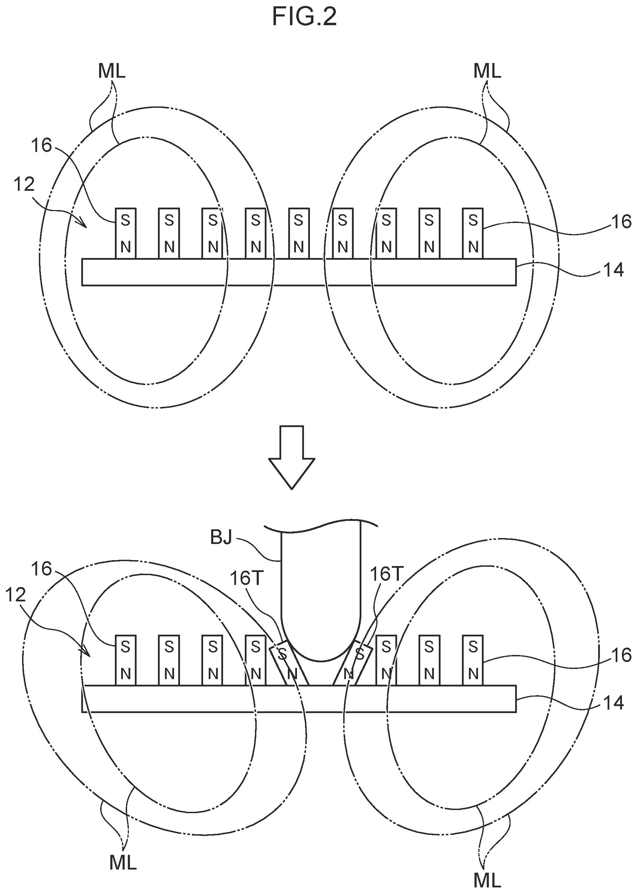

A plurality of protrusions 16 are provided on the front surface 14A of the base portion 14. The protrusion 16 protrudes from the front surface 14A of the base portion 14. The protrusion 16 is an example of a raised portion. In the first embodiment, the protrusion 16 has a cylindrical shape. As also illustrated in Fig. 2, the protrusion 16 has a rectangular shape in front view or side view. A cross section in a case in which the protrusion 16 is cut along a plane orthogonal to the protruding direction (plane parallel to the front surface 14A) is circular, and the cross-sectional shape of the protrusion 16 is constant regardless of the cross-sectional position. All the protrusions 16 have the same shape.

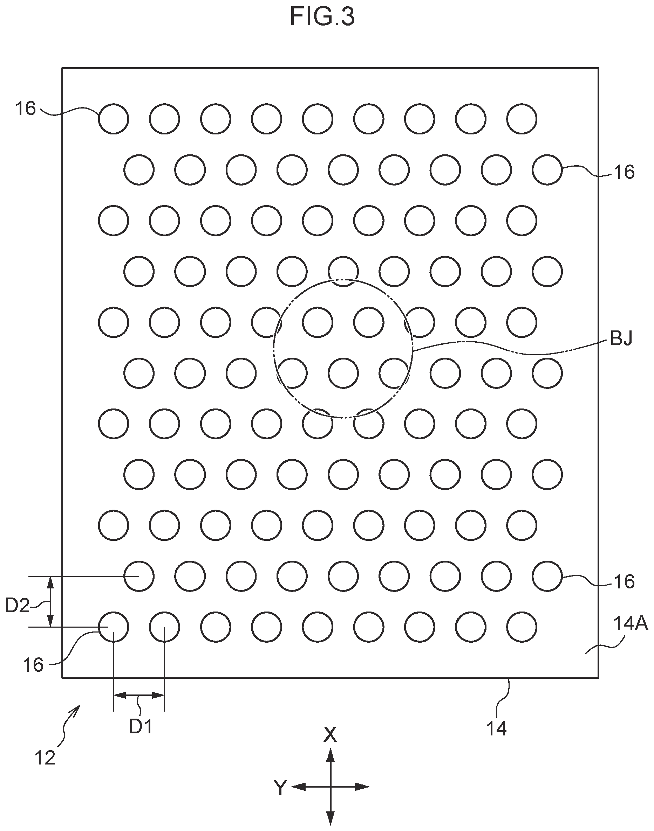

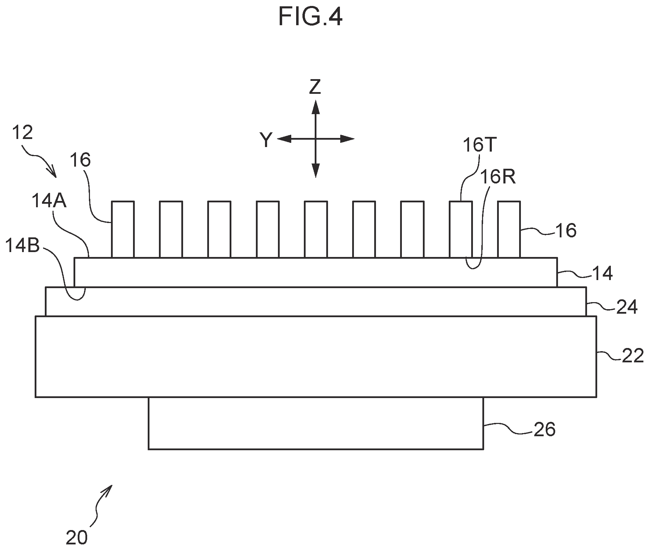

As illustrated in Fig. 3, the plurality of protrusions 16 are arranged at constant intervals in a direction (in-plane direction) along the front surface 14A. The plurality of protrusions 16 are distributed in the direction along the front surface 14A. Specifically, the protrusions 16 are arranged at a constant interval D1 in the width direction, and are arranged at a constant interval D2 in the depth direction. In the example illustrated in Fig. 4, the rows of the protrusions 16 in the depth direction are alternately arranged at positions shifted by half of the interval D1 in the width direction. The arrangement of the plurality of protrusions 16 is a so-called staggered arrangement. In a case in which attention is paid to an arbitrary protrusion 16, the protrusions 16 located around the arbitrary protrusion are located at any of the apexes of the regular hexagon centered on the protrusion 16 of interest.

Each protrusion 16 is made of rubber similar to the base portion 14. The protrusion 16 may be formed separately from the base portion 14 and fixed to the base portion 14 by means of welding, adhesion, or the like. In this embodiment, the protrusion 16 is integrated with the base portion 14 and is continuous from the base portion 14. As illustrated in Fig. 2, in a case in which an external force acts on a distal end 16T side of the protrusion 16 from an object BJ, the protrusion 16 is elastically deformed, and the distal end 16T is displaced in the width direction and the depth direction.

Each of the protrusions 16 is magnetized. For example, a predetermined amount of magnetic material (for example, ferrite powder) is blended with rubber, and the protrusion 16 is magnetized. The direction of the polarity of the protrusion 16 is not limited, and as in the example illustrated in Fig. 2, a proximal end 16R side of the protrusion 16 may be the N-pole, the distal end 16T side may be the S-pole, or the polarities thereof may be reversed. The protrusion 16 and the base portion 14 may be magnetized as a whole. In this case, the distal end 16T of the protrusion 16 becomes one magnetic pole (for example, the S-pole), and the base portion 14 becomes the other magnetic pole (for example, the N-pole).

As illustrated in Fig. 2, since the protrusion 16 is magnetized, a magnetic field is generated around the rubber composition 12, and lines of magnetic force ML are generated. The spatial distribution of the intensity of the magnetic field changes with the deformation of the protrusion 16. In the lower view of Fig. 2, this is illustrated as a shape change of the lines of magnetic force ML. For example, the magnetic field changes differently depending on the position of the deformed protrusion 16 among the plurality of protrusions 16 arranged at intervals in the width direction and the depth direction. In a case in which the degree of deformation varies depending on the position of the protrusion 16, a change (spatial change) in the magnetic field corresponding thereto occurs. In a case in which the deformation of the protrusion 16 is accompanied by a temporal transition, that is, in a case in which the shape of the protrusion 16 is not temporally constant and changes with the lapse of time, a change (temporal change) in the magnetic field with the lapse of time occurs. In particular, in a case in which the position of the deformed protrusion 16 vibrates temporally in the in-plane direction of the front surface 14A, the change in the magnetic field also vibrates temporally. As described above, in the technology of the disclosure, it is possible to grasp not only the position where the protrusion 16 is deformed but also the distribution and temporal change of the deformed position in the in-plane direction.

On the other hand, the base portion 14 may be magnetized or need not be magnetized. For example, in a configuration in which a magnetic material is blended in the rubber of the base portion 14, the base portion 14 is magnetized together with the protrusion 16. In a configuration in which a magnetic material is not blended in the rubber of the base portion 14, the protrusion 16 is magnetized, but the base portion 14 is not magnetized.

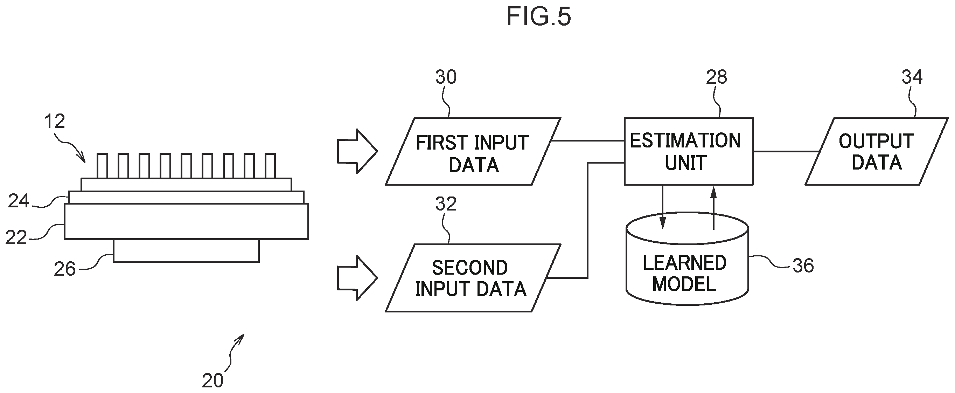

In this embodiment, the shear force acting on the plurality of protrusions 16 is further associated with the change in the magnetic field by a shear force estimation method using a shear force estimation device 20 illustrated in Figs. 4 and 5. The shear force acting on the protrusion 16 correlates with the displacement amount of the distal end 16T of the protrusion 16.

The shear force estimation device 20 includes a support base 22 and a shear force sensor 24. In the example illustrated in Fig. 4, the shear force sensor 24 is disposed on the support base 22. The rubber composition 12 is disposed on the shear force sensor 24. A magnetic force sensor 26 is disposed beneath the support base 22. The shear force sensor 24 detects the shear force acting on the protrusion 16 from the object BJ.

The shear force estimation device 20 further includes an estimation unit 28 as illustrated in Fig. 5. First input data 30 and second input data 32 are input to the estimation unit 28. The first input data 30 is data indicating the shear force obtained by the shear force sensor 24. The second input data 32 is data indicating the magnetic force obtained by the magnetic force sensor 26. The estimation unit 28 outputs output data 34. The output data 34 is data indicating the magnitude of deformation of the protrusion 16 of the rubber composition 12 as an estimation result. The output data 34 includes a spatial distribution in the in-plane direction, that is, the X-axis direction and the Y-axis direction, and a temporal distribution in the measurement time.

The estimation unit 28 includes a trained learned model 36. The learned model 36 is a model that has completed learning for deriving the magnitude of deformation of the protrusion 16 (output data 34) from the shear force of the protrusion of the rubber composition 12 (first input data 30) and the magnetic force around the rubber composition 12 (second input data 32). The learned model 36 is, for example, a model that defines a learned neural network. The learned model 36 is reproduced as a set of information of weights (intensities) of coupling between nodes (neurons) constituting the neural network.

In a case in which the rubber composition 12 is actually placed at a predetermined target position and a change in the magnetic field is detected, as illustrated in Fig. 4, the magnetic force sensor 26 is disposed at a position where the change in the magnetic field of the rubber composition 12 can be measured. In this case, the shear force sensor 24 is unnecessary. That is, as illustrated in Fig. 5, learning of outputting the magnitude of deformation of the protrusion 16 as the output data 34 from the first input data 30 and the second input data 32 is performed. Therefore, in an actual use state of the rubber composition 12, it is possible to obtain the magnitude of deformation of each protrusion 16 from the magnetic force obtained by the magnetic force sensor 26.

Next, operation of this embodiment will be described.

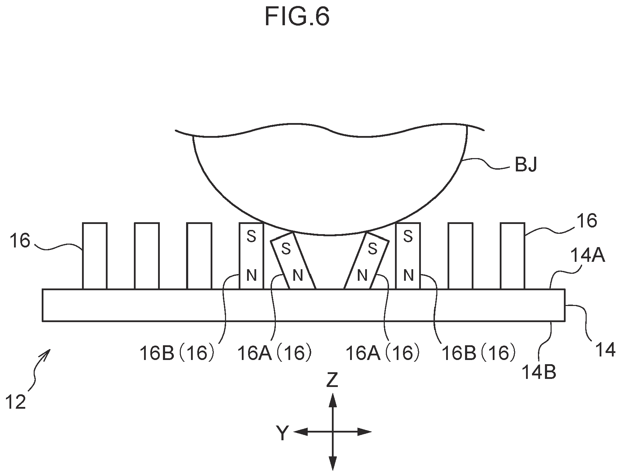

In the rubber composition 12 of this embodiment, as illustrated in Fig. 6, in a case in which the object BJ comes into contact with some of all the plurality of protrusions 16 and the protrusions 16 are deformed, the magnetic field around the rubber composition 12 changes. By detecting the change in the lines of magnetic force with the magnetic force sensor 26, various kinds of information on the object BJ in contact with the rubber composition 12 can be obtained.

In the example illustrated in Fig. 6, a case in which the rubber composition 12 is installed so that the thickness direction coincides with the vertical direction is illustrated. In Fig. 6, as also illustrated in Fig. 3, a state where the object BJ is in contact with a central position in plan view of the rubber composition 12 (as viewed in the thickness direction) is illustrated. The protrusion 16 is deformed by the contact of the object BJ. The position at which the object BJ is in contact can be known from the change in the magnetic field caused by the deformation of the protrusion 16.

In particular, in the example illustrated in Fig. 6, a case in which the deformation of two protrusions 16A located at the center in a case in which the base portion 14 is viewed from the front is large and the deformation of protrusions 16B around the protrusions 16A is small is illustrated. As described above, in a case in which the plurality of protrusions 16 are deformed and it is known from the spatial distribution of the change in the magnetic field that the deformation amount differs for each protrusion 16, the shape of the object BJ (the shape of the surface facing the rubber composition 12) can be estimated.

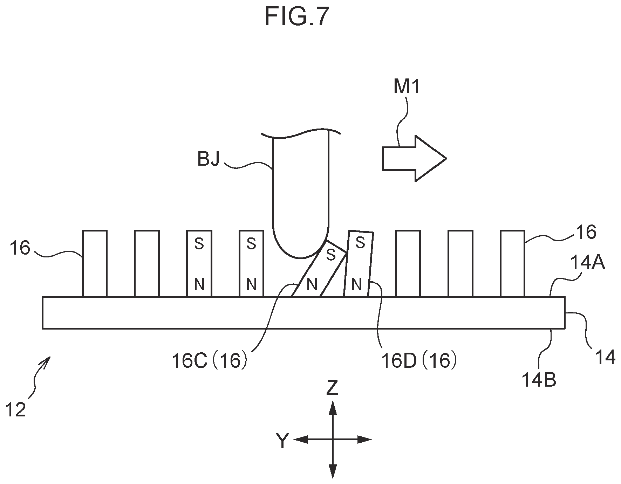

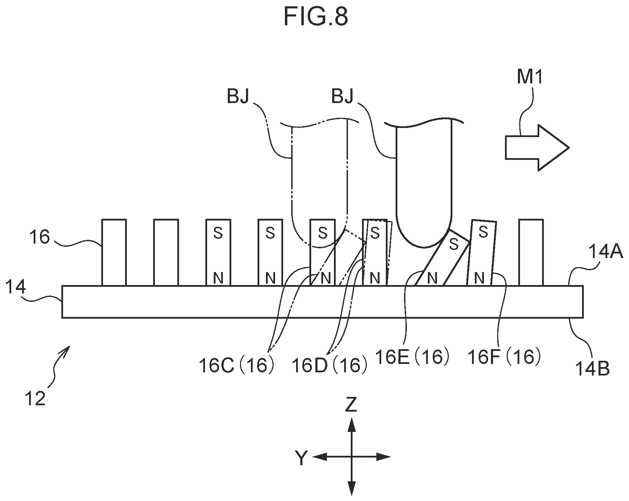

In the example illustrated in Fig. 7, a case in which the object BJ moves in the direction of arrow M1 in the in-plane direction of the base portion 14 is illustrated. In this case, the protrusion 16 to be deformed is replaced in accordance with the movement of the object BJ. In the example illustrated in Fig. 7, a protrusion 16C is pushed by the object BJ and greatly deformed in the direction of arrow M1. A protrusion 16D adjacent to the protrusion 16C is pushed by the protrusion 16C and deformed. However, the deformation amount of the protrusion 16D is smaller than the deformation amount of the protrusion 16C. As the object BJ moves in the direction of arrow M1, the deformation amount of the protrusion 16C gradually increases, and the deformation amount of the protrusion 16D also gradually increases. In a case in which the movement amount of the object BJ in the direction of arrow M1 further increases, the object BJ is separated from the protrusions 16C and 16D as illustrated in Fig. 8, so that the deformation of the protrusions 16C and 16D is eliminated. The object BJ presses a protrusion 16E on the side in the direction of arrow D1. The protrusion 16E and a protrusion 16F pushed by the protrusion 16E are deformed. As described above, it is possible to know the direction and speed of the movement of the object BJ by knowing the spatial transition and the temporal transition of the protrusion 16 to be deformed.

In the examples illustrated in Figs. 7 and 8, even in a case in which the object BJ moves in the direction opposite to arrow M1, it is possible to know the direction and speed of the movement. In a case in which the object BJ alternately moves in the direction of arrow M1 and the opposite direction, it can be estimated that the object BJ is vibrating.

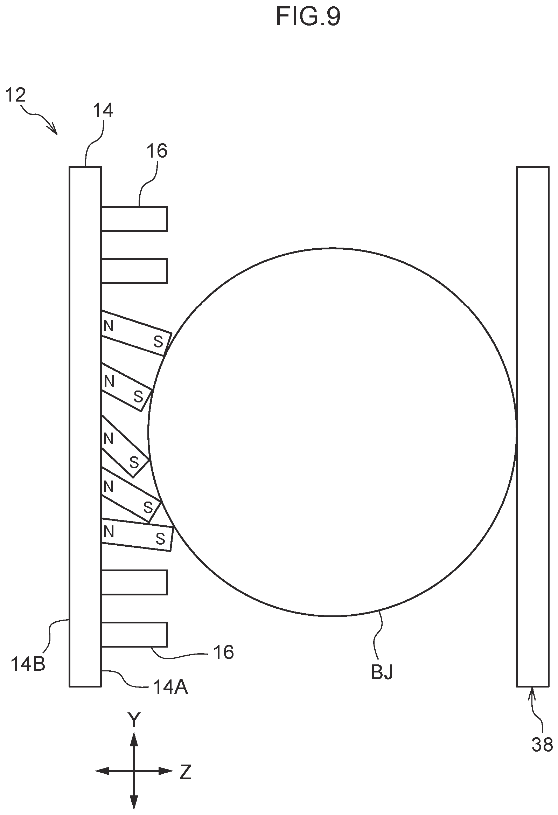

In the example illustrated in Fig. 9, the rubber composition 12 is disposed so that the thickness direction (Z-axis direction) is the horizontal direction. An opposing wall 38 is disposed on the front surface 14A of the base portion 14. The object BJ is sandwiched between the rubber composition 12 and the opposing wall 38. In this case, the plurality of protrusions 16 are deformed, and the deformation amount of the protrusion 16 differs at the position of the protrusion 16 according to the shape of the object BJ.

Each of the protrusions 16 has a correlation between the deformation amount and the elastic force. This correlation may be linear or non-linear. That is, the larger the deformation of the protrusion 16 is, the larger the elastic force is exerted. Therefore, it is possible to know the sum of the elastic forces of the deformed protrusions 16 from the change in the magnetic field generated by the protrusions 16. As a result, the weight acting on the object BJ, that is, the mass of the object BJ can be estimated.

For example, even in a case in which the rubber composition 12 is installed so that the thickness direction coincides with the vertical direction, as the mass of the object BJ increases, the deformation amount of the protrusion 16 increases. Therefore, even in this case, it is possible to know the mass of the object BJ. In the example illustrated in Fig. 9, for example, as compared with the example illustrated in Fig. 6, it is possible to know the mass of the object BJ with high accuracy by sandwiching the symmetric object BJ with the opposing wall 38.

In the first embodiment, the above example shows a case in which the protrusion 16 has a cylindrical shape. In the protrusion 16 having a cylindrical shape, since the cross-sectional shape in the direction orthogonal to the protruding direction is constant (circular), the deformed shape of the protrusion 16 is stabilized. As an example in which the cross-sectional shape in the direction orthogonal to the protruding direction is constant as described above, a polygonal columnar shape may be used in addition to the cylindrical shape. However, the shape of the protrusion according to the disclosed technology is not limited to the cylindrical shape and the polygonal columnar shape, and the shape of the protrusion of the following various embodiments can be exemplified. In the following embodiment, the same elements, members, and the like as those in the first embodiment are denoted by the same reference numerals as those in the first embodiment.

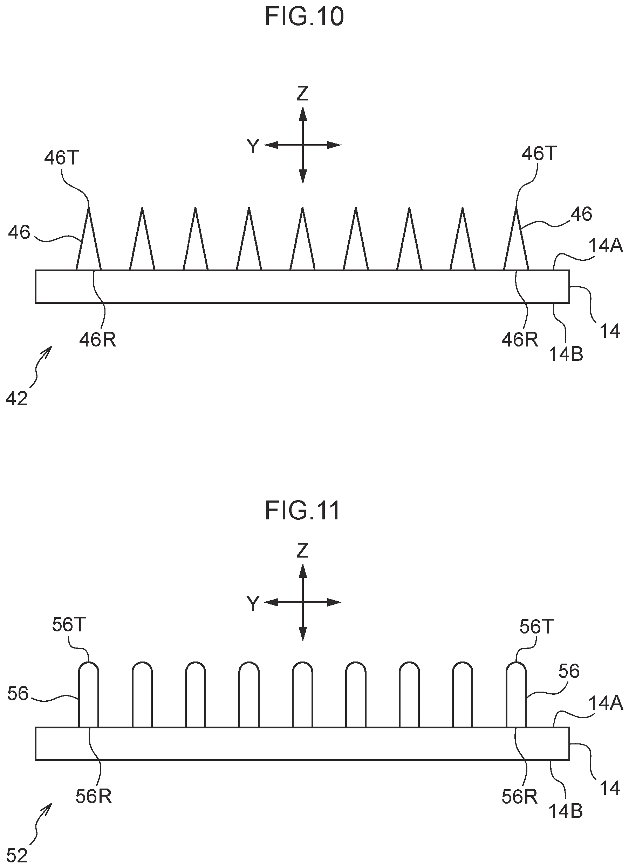

In a rubber composition 42 of a second embodiment illustrated in Fig. 10, a protrusion 46 has a conical shape. The protrusion 46 is an isosceles triangle in front view or side view. A cross section in a case in which the protrusion 46 is cut along a plane orthogonal to the protruding direction is circular, but the cross-sectional area of the protrusion 46 decreases as it goes away from the base portion 14. That is, the protrusion 46 (raised portion) according to the second embodiment is an example of a shape including a portion in which a cross-sectional area in a direction orthogonal to the protruding direction (raised direction) decreases toward a distal end 46T side.

The protrusion 46 has a shape that becomes thinner (the cross-sectional area decreases) toward the distal end 46T side. Therefore, even in a case in which the external force acting from the object BJ (see Fig. 6 and the like) is small, the distal end 46T side is easily deformed as compared with the cylindrical protrusion 16. That is, even in a case in which the external force acting from the object BJ is small, the protrusion 46 can cause a change in the magnetic field due to the deformation of the protrusion 46. In this respect, the protrusion 46 has high sensitivity.

A proximal end 46R of the protrusion 46 is thicker than the distal end 46T. In other words, the cross-sectional area increases from the distal end 46T toward the proximal end 46R. Therefore, in a case in which the external force acting from the object BJ is large, the proximal end 46R side is hardly deformed. That is, the protrusion 46 has such a shape that the external force can be supported, in response to a case in which the external force acting from the object BJ is large.

In a rubber composition 52 of a third embodiment illustrated in Fig. 11, a protrusion 56 has a hemispherical shape on a distal end 56T side thereof. In front view or side view, a semicircular shape on the distal end 56T side and a rectangular shape of a portion other than the distal end 56T appear. A cross section taken along a plane orthogonal to the protruding direction is circular. In the hemispherical portion on the distal end 56T side, the cross-sectional area of the protrusion 56 decreases as it goes away from the base portion 14. That is, the protrusion 56 (raised portion) according to the third embodiment is also an example of a shape including a portion in which a cross-sectional area in a direction orthogonal to the protruding direction (raised direction) decreases toward the distal end 56T side. The protrusion 56 according to the third embodiment has a shape in which the distal end 56T side is easily deformed as compared with the protrusion 16 having a cylindrical shape.

In the protrusion 56 according to the third embodiment, the distal end 56T side is curved, and has a shape without a sharp portion. For this reason, as compared with the protrusion 46 according to the second embodiment, the durability of the protrusion 56 is high, and the distal end 16T is less worn or damaged even in a case in which the deformation is repeated many times.

In the disclosed technology, the "shape including a portion in which a cross-sectional area in a direction orthogonal to the raised direction decreases toward the distal end side in the raised direction" is not limited to the shapes of the second embodiment and the third embodiment. For example, the protrusion may have a shape in which the cross-sectional area changes stepwise at an intermediate position of the protrusion height.

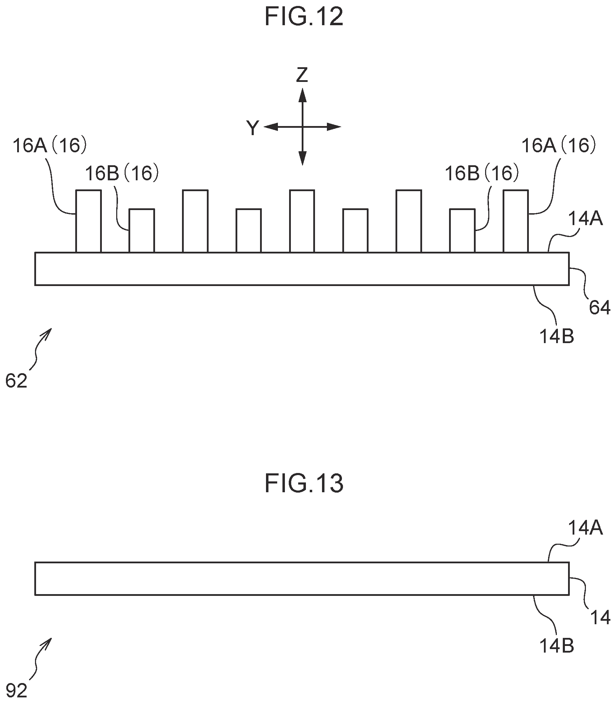

In a rubber composition 62 of a fourth embodiment illustrated in Fig. 12, a plurality of kinds of protrusions 16 having different protrusion heights from the base portion 14 are provided. Specifically, the protrusion 16 has a two-stage cylindrical shape including a cylindrical protrusion 16A having a relatively high protrusion height and a cylindrical protrusion 16B having a low protrusion height. In the example illustrated in Fig. 12, in the depth direction (arrow Y direction), the protrusion 16A and the protrusion 16B are alternately arranged.

In the rubber composition 62 of the fourth embodiment, a state where the object BJ (see Fig. 6) is in contact with the protrusion 16A but not in contact with the protrusion 16B is realized at the initial stage of contact with the protrusion 16. That is, even in a case in which the object BJ is in contact with the protrusion 16A, the protrusion 16B on both sides has a low protrusion height, so that a state where the object BJ is not in contact with the protrusion 16B is realized. In this case, as compared with a rubber composition including only protrusions having the same protrusion height, the external force from the object BJ is supported with less deformation of the protrusion 16A at the initial stage of contact. As the object BJ moves toward the base portion 14 side, the object BJ comes into contact with the protrusion 16B in addition to the protrusion 16A, and the protrusion 16A and the protrusion 16B are deformed. As a result, the change in the magnetic field can be generated stepwise according to the position of the object BJ.

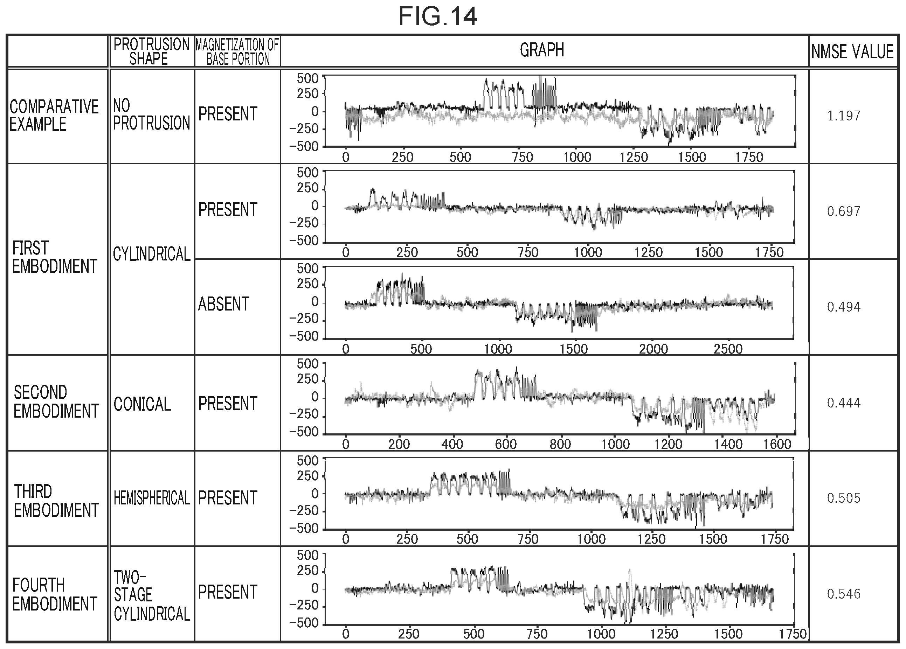

Fig. 14 shows an example of evaluation results obtained by estimating the shear forces in the rubber compositions having various protrusion shapes described above and a rubber composition 92 of a comparative example. In the rubber composition 12 of the first embodiment, there are two kinds of configurations: a configuration in which the base portion 14 is magnetized and a configuration in which the base portion 14 is not magnetized. As illustrated in Fig. 13, the rubber composition 92 of the comparative example does not include the protrusion 16, and the front surface 14A of the base portion 14 is flat.

In each graph of Fig. 14, the shear force acting on the front surface 14A side of the base portion 14 is illustrated as a function of the position in the width direction or the depth direction. The horizontal axis of the graph represents the position in the width direction or the depth direction (unit is mm: millimeter), and the vertical axis represents the shear force (unit is N: Newton). A solid line is an actual measured value of the shear force sensor 24 (see Fig. 4) in a measuring device illustrated in Fig. 14, and a two-dot chain line is an estimated value from a value detected by the magnetic force sensor 26 (see Fig. 4). It can be said that the shear force can be estimated with higher accuracy as the two-dot chain line has a shape closer to the solid line. The value of normalized mean square error (NMSE) shown in Fig. 14 is a normalized mean square error between the measured value and the estimated value, and it can be said that the smaller the value, the smaller the deviation between the measured value and the estimated value.

In the rubber composition 92 of the comparative example, the estimated value of the shear force largely deviates from the measured value, and the numerical value of the NMSE is also large.

On the other hand, the rubber composition 12 of the first embodiment has the cylindrical protrusion 16. As for the shear force, the deviation of the estimated value from the measured value is smaller than that in the comparative example. In the rubber composition 12 of the first embodiment, the numerical value of the NMSE is also smaller than that of the comparative example. In particular, in the case of the configuration in which the base portion 14 is not magnetized, the value of the NMSE is smaller than that in a case in which the base portion 14 is magnetized.

Also in the rubber composition 42 of the second embodiment, the deviation of the estimated value from the measured value for the shear force is smaller than that in the comparative example. In particular, in the case of the second embodiment, the value of the NMSE is small as compared with other embodiments.

Also in the rubber composition 52 of the third embodiment and the rubber composition 62 of the fourth embodiment, the deviation of the estimated value from the measured value of the shear force is smaller than that in the comparative example, and the value of the NMSE is also small.

As described above, it can be seen that the estimated value close to the measured value is obtained for the shear force acting on the rubber composition regardless of the shape of any protrusion.

In the example illustrated in Fig. 14, only the first embodiment illustrates an example in which the base portion 14 is not magnetized, but in each of the second to fourth embodiments, the base portion 14 may be configured to be not magnetized.

In each of the above embodiments, the protrusion 16, the protrusion 46, the protrusion 56, and the protrusion 66 are exemplified as the raised portion. The raised portion according to the disclosed technology is not limited to the protrusion 16, the protrusion 46, the protrusion 56, and the protrusion 66 having various shapes described above. For example, a protrusion wall may protrude from the front surface 14A of the base portion 14 and spread in at least one of the width direction or the depth direction. Examples of such a protrusion wall include configurations of a fifth embodiment and a sixth embodiment described below.

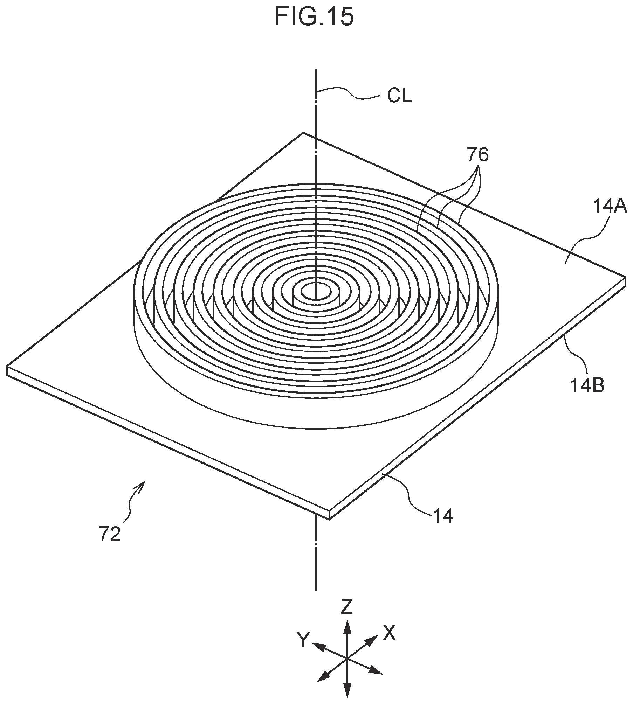

In a rubber composition 72 of the fifth embodiment illustrated in Fig. 15, a plurality of circular protrusion walls 76 are concentrically formed with respect to a center line CL in plan view of the base portion 14. Each of the protrusion walls 76 is hardly deformed in the circumferential direction of a circle centered on the center line CL, but is easily deformed in the radial direction, and in particular, has a structure in which the distal end side of the protrusion wall 76 is easily inclined radially inward.

Therefore, in the rubber composition 72 of the fifth embodiment, the shape and displacement of the object BJ in the vicinity of the center line CL are easily detected.

In the rubber composition 72 of the fifth embodiment, the specific configurations such as the number, thickness, protrusion height, and distance (radius) from the center line CL of protrusion walls 76 are not particularly limited. That is, the specific configuration of the protrusion wall 76 can be appropriately set in consideration of the deformed shape of the protrusion wall 76 due to an assumed external force.

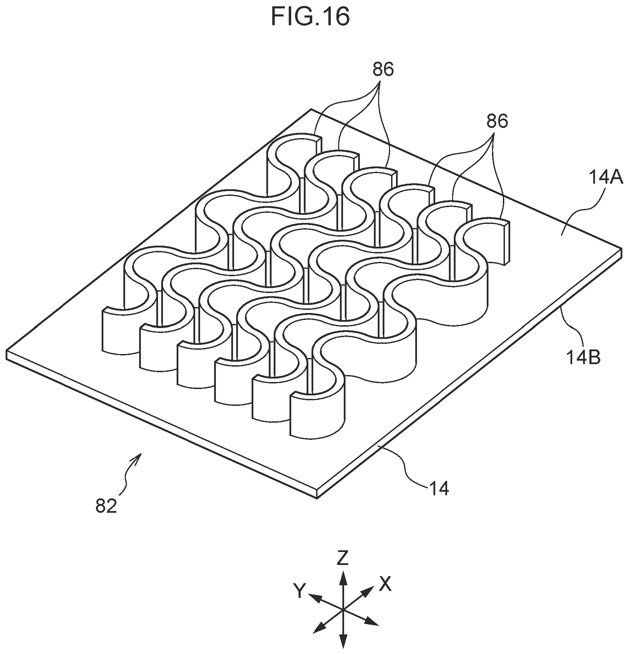

In a rubber composition 82 of the sixth embodiment illustrated in Fig. 16, a plurality of protrusion walls 86 having a wavy shape along the width direction in plan view of the base portion 14 are formed at constant intervals in the depth direction. In the example illustrated in Fig. 16, the waveform has a constant amplitude and wavelength in one protrusion wall 86, and has a length corresponding to three wavelengths in the width direction. The number of protrusion walls 86 is 6. However, the specific shape and number of the protrusion walls 86 such as the amplitude and the wavelength, and the interval, number, and the like of protrusion walls 86 arranged in the depth direction are not particularly limited. Also in the sixth embodiment, the base portion 14 may be magnetized or need not be magnetized.

In the rubber composition 82 of the sixth embodiment, each of the protrusion walls 86 has a structure that is relatively hardly deformed in a wave-shaped extending direction (in Fig. 16, the width direction of the base portion 14, the arrow X direction) and is easily deformed in a direction orthogonal thereto (in Fig. 16, the depth direction of the base portion 14, the arrow Y direction).

Therefore, in the rubber composition 82 of the sixth embodiment, for example, the protrusion wall 86 is greatly deformed even with a relatively small external force in the depth direction in a case in which the base portion 14 is viewed in plan view, and is hardly deformed with a relatively small external force in the width direction. As described above, it is possible to make the detection sensitivity to the external force different according to the orientation of the base portion 14.

The mass of the object BJ can be estimated by sandwiching the object BJ between the rubber composition 82 of the sixth embodiment and the opposing wall 38 as in the case illustrated in Fig. 9. In this case, the direction in which the rubber composition 82 is disposed (which of the width direction and the depth direction of the base portion 14 is the vertical direction) is not limited. For example, the mass of the object BJ can be estimated with high sensitivity by arranging the protrusion walls 86 in a direction in which the arrangement direction (depth direction of the base portion 14) coincides with the vertical direction. By arranging the protrusion walls 86 in a direction in which the wave-shaped extending direction of the protrusion wall 86 (the width direction of the base portion 14) coincides with the vertical direction, the range of the mass of the object BJ that can be estimated is widened.

The member and the device to which the rubber composition of the technology of the disclosure is applied are not particularly limited. That is, the disclosure can be applied to a configuration in which a force acting from the object BJ is detected and displacement of the object is detected in the member or the device in contact with the object BJ (see Fig. 6 and the like). As an example, the disclosure can be applied to a surface of an airbag-type elastic contraction body called a rubber actuator. In this case, the magnetic force sensor 26 (see Fig. 4) that detects the change in the magnetic field may be disposed inside the elastic contraction body, or may be disposed outside the elastic contraction body.

In the above description, the base portion 14 has a plate shape or a sheet shape, but the shape of the base portion 14 is not limited thereto, and may be, for example, a block shape.

In the above description, the base portion 14, the protrusions 16, 46, 56, and 66, and the protrusion walls 76 and 86 are made of rubber; however, these elements are not limited to rubber. For example, these elements may be made of an elastic resin (elastomer).

The entire contents of the disclosures by Japanese Patent Application No. 2023-212481 filed on December 15, 2023 are incorporated herein by reference.

All the literature, patent application, and technical standards cited herein are also herein incorporated to the same extent as provided for specifically and severally with respect to an individual literature, patent application, and technical standard to the effect that the same should be so incorporated by reference.

## Claims

1. An elastomeric composition, comprising:
a base portion; and
a raised portion raised from a surface of the base portion, distributed in a direction along the surface, magnetized, and elastically deformed by an external force.

2. The elastomeric composition according to claim 1, wherein the raised portion has a constant cross-sectional shape in a direction parallel to the surface.

3. The elastomeric composition according to claim 1, wherein the raised portion has a shape including a portion in which a cross-sectional area in a direction parallel to the surface decreases toward a distal end side in a raised direction.

4. The elastomeric composition according to claim 1, wherein the raised portion includes a plurality of protrusions arranged at intervals in the direction along the surface.

5. The elastomeric composition according to claim 1, wherein the base portion is formed of nonmagnetic rubber.
